# EUROPEAN PATENT APPLICATION

(11) **EP 4 794 344 A1**
(43) Date of publication of application: **19.08.2026**
(21) Application number: 25305199.9
(22) Date of filing: 13.02.2025
(51) Int. Cl.: H04N 21/81

(54) **UDIM SUPPORT FOR SCENE DESCRIPTION**

(71) Applicant: InterDigital CE Patent Holdings, SAS, 75017 Paris (FR)
(72) Inventor: AVRIL, Quentin, 35830 BETTON (FR); COVA REGATEIRO, João Pedro, 35220 CHATEAUBOURG (FR); LE CLERC, Francois, 35590 L'HERMITAGE (FR); GOSSELIN, Philippe Henri, 35235 THORIGNE-FOUILLARD (FR)
(74) Representative: Vossius & Partner Patentanwälte Rechtsanwälte mbB

(57) **Abstract**

Some embodiments of a method may include: obtaining avatar format data associated with an avatar; parsing the avatar format data for a textures structure; and performing a loop for each texture element of the textures structure, wherein the loop includes: determining a U-Dimensional (UDIM)-based extension exists within the textures structure; parsing data associated with the UDIM-based extension; determining a u-coordinate (uValue) attribute exists within the texture element; parsing the uValue attribute; determining a v-coordinate (vValue) attribute exists within the texture element; parsing the vValue attribute; determining a source attribute exists within the texture element; and parsing the source attribute.

## Description

### INCORPORATION BY REFERENCE

The present application incorporates by reference in their entirety the following applications: International Patent Application Serial No. PCT/EP2025/050214, entitled "AVATAR FORMAT VALIDATION IN SCENE DESCRIPTIONS" and filed January 7, 2025 ("'214 application"); and European Patent Application Serial No. EP24305073, entitled "AVATAR FORMAT VALIDATION IN SCENE DESCRIPTIONS" and filed January 11, 2024 ("'073 application").

### BACKGROUND

The present application is related to 3D digital representation.

### SUMMARY

An example method in accordance with some embodiments may include: obtaining avatar format data associated with an avatar; parsing the avatar format data for a textures structure; and performing a loop for each texture element of the textures structure, wherein the loop includes: determining a U-Dimensional (UDIM)-based extension exists within the textures structure; parsing data associated with the UDIM-based extension; determining a u-coordinate (uValue) attribute exists within the texture element; parsing the uValue attribute; determining a v-coordinate (vValue) attribute exists within the texture element; parsing the vValue attribute; determining a source attribute exists within the texture element; and parsing the source attribute.

For some embodiments of the example method, each texture element of the textures structure complies with a Tile structure defined in a Moving Picture Experts Group (MPEG)-based extension.

For some embodiments of the example method, the textures structure complies with a tiles structure defined in an MPEG -based extension.

Some embodiments of the example method may further include populating a data structure corresponding to at least one element of the textures structure.

For some embodiments of the example method, the textures structure includes information indicating a mapping between one or more textures and one or more corresponding UV space tiles.

For some embodiments of the example method, the mapping correlates at least one vertex in a three-dimensional (3D) texture to a respective location on a two-dimensional (2D) UV space tile.

For some embodiments of the example method, each uValue attribute includes minimum and maximum U coordinate values of a corresponding UV space tile, and each vValue attribute includes minimum and maximum V coordinate values of the corresponding UV space tile.

For some embodiments of the example method, each source attribute indicates a reference to an image.

For some embodiments of the example method, the textures structure includes a first texture element and a second texture element, the first texture element corresponds to a first UV space tile, and the second texture element corresponds to a second UV space tile.

For some embodiments of the example method, the first UV space tile corresponds to a first resolution, the second UV space tile corresponds to a second resolution, and the first resolution is different than the second resolution.

For some embodiments of the example method, the first UV space includes two or more textures corresponding to the avatar.

For some embodiments of the example method, at least one texture element of the textures structure corresponds to a body part of the avatar.

Some embodiments of the example method may further include rendering the avatar in a scene description environment using the textures structure.

For some embodiments of the example method, the avatar format data complies with at least one standard from a group consisting of an MPEG-I Scene Description (SD)-based standard, a Graphics Language Transmission Format (gITF)-based standard, an Extensible Markup Language (XML)-based standard, and a Universal Scene Description (USD)-based standard.

An example apparatus in accordance with some embodiments may include: a processor; and a memory storing instructions operative, when executed by the processor, to cause the apparatus to perform the method of any one of the methods listed above.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a schematic illustration showing an example UV mapping of a cube mesh according to some embodiments.
FIG. 3 is a schematic illustration showing an example UV mapping of an image as a texture on a cube according to some embodiments.
FIG. 4 is a schematic illustration showing an example UDIM map of a full body according to some embodiments.
FIG. 5 is a schematic illustration showing example textures to apply to an avatar according to some embodiments.
FIG. 6 is a schematic illustration showing an example UDIM space for an avatar according to some embodiments.
FIG. 7 is a schematic illustration showing example UDIM space textures according to some embodiments.
FIG. 8 is a flowchart illustrating an example processing of an MPEG_primitives_UDIM extension according to some embodiments.
FIG. 9 is a flowchart illustrating an example process for processing avatar texture data according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

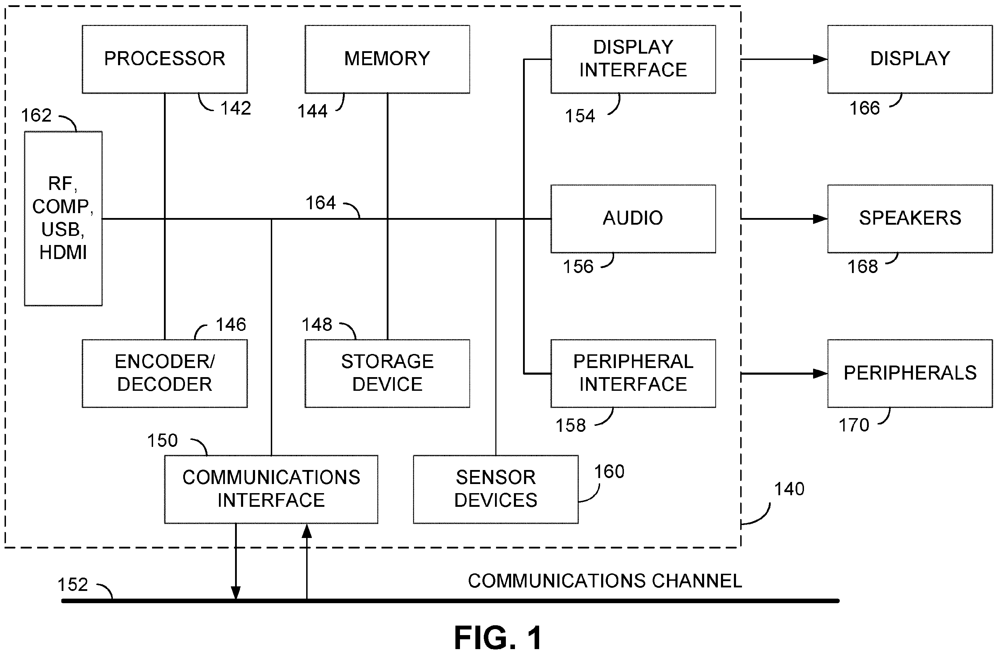

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or WC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

The present application relates to 3D digital representation and, more precisely, how 3D meshes are textured. This application describes how to define and encode UDIM textures (U-Dimensional textures) to apply to a 3D mesh in a scene description format (e.g., Graphics Language Transmission Format (gITF), among others). See Khronos gITF Specification for the Efficient Transmission and Loading of 3D Scenes and Models by Engines and Applications, KHRONOS, available at: www<dot>khronos<dot>org/gltf/ (*"gITF 3D Scene Transmission"*). The format is compliant with MPEG-I SD for illustration purposes, but its meaning and use is generic. See Text of Information Technology - Coded Representation of Immersive Media - Part 14: Scene Description for MPEG Media: FDIS Comments, ISO/IEC, DIS 23090-14:2021(E) (2021)("ISO/IEC *23090-14 Comments"*)*.* As described in *ISO*/*IEC 23090-14 Comments,* the current MPEG-I Scene Description (SD) format allows the storage of several digital representations, such as 3D meshes.

### UV mapping

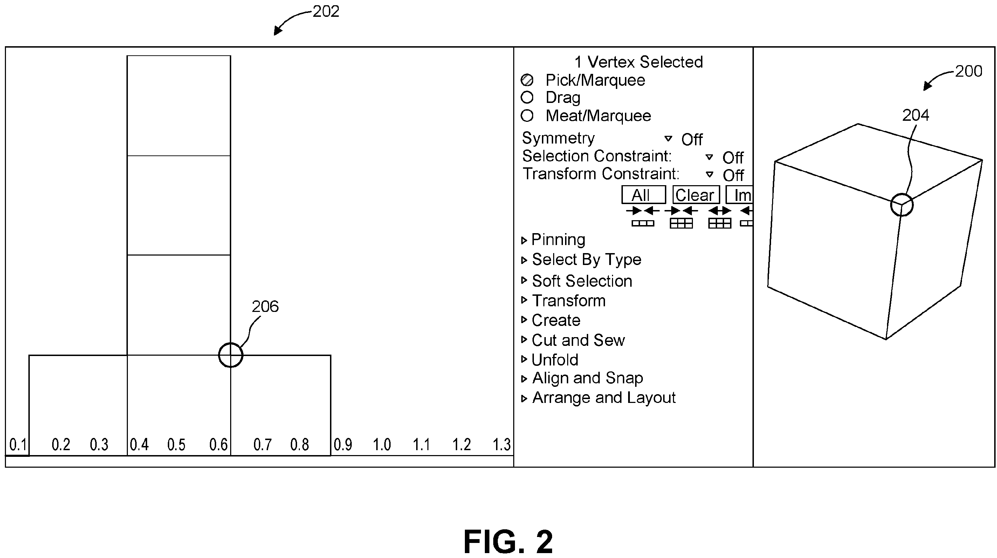

FIG. 2 is a schematic illustration showing an example UV mapping of a cube mesh according to some embodiments. As illustrated in the example of FIG. 2, texturing of a cube mesh is based on UV mapping, in which each 3D vertex 204 has a corresponding 2D texture coordinate 206. The faces of a 3D cube 200 are flattened into the square faces in the corresponding 2D UV space 202. One vertex is highlighted with a circle 204, 206 in both spaces. In this example, one 3D vertex is linked to one texture coordinate. For the 2D space 202, texture coordinates vary from 0 to 1 on the horizontal (u) and vertical (v) axis.

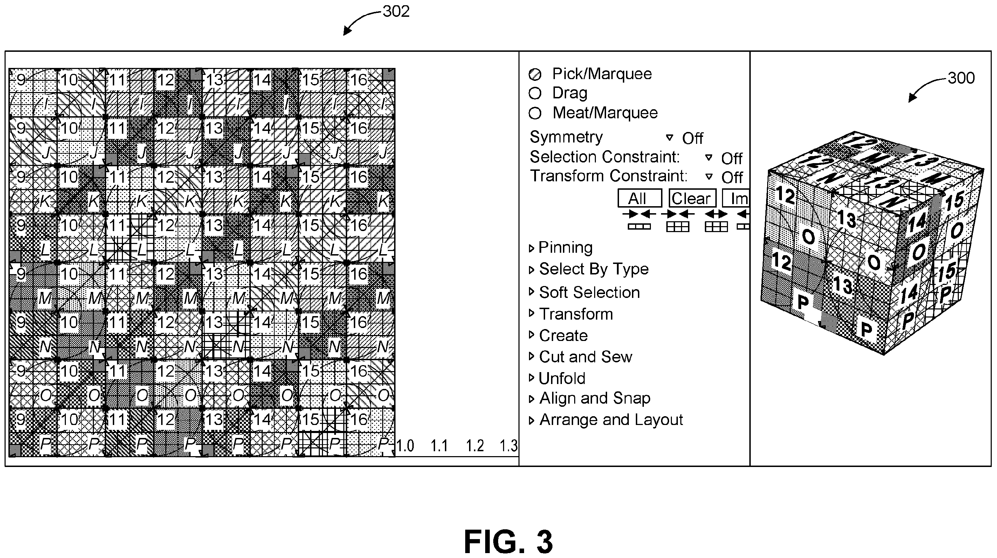

FIG. 3 is a schematic illustration showing an example UV mapping of an image as a texture on a cube according to some embodiments. As shown in the example of FIG. 3, a 3D cube 300 is mapped to a 2D space 302. The texture space 302 is shown in a UV space in which the coordinates vary from 0 to 1 on the horizontal (u) and the vertical (v) axis.

### UDIM texturing

UDIM (U-DIMensional texture) is an enhancement to the UV mapping and texturing workflow that makes UV map generation easier and assignment of textures simpler. UDIM is a tile system in which, for some embodiments, each tile is a different texture with its own UV space. UDIM is a method for managing texture tiles across applications, such as high resolution assets. UDIMs provide more flexibility because each tile may be a separate resolution (e.g., HD, 4k, among others). This flexibility allows complex details to be captured without the need for massive single texture maps. The UDIM workflow may also save time when importing textures because the software automates the texture-linking process.

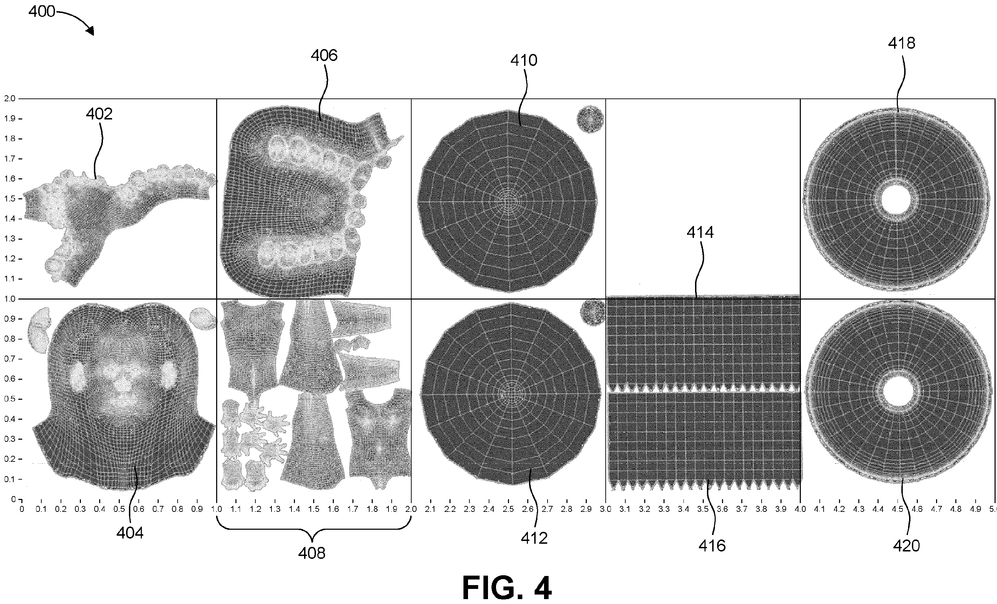

FIG. 4 is a schematic illustration showing an example UDIM map of a full body according to some embodiments. An example UDIM map 400 for the full body of an avatar named "Morgan" is illustrated in FIG. 4. See Avril, Quentin, et al., MORGAN: MPEG Original Reference Geometric Avatar Neutral, ACM-WEB3D (2023) ("*Avril*")*.* The UDIM map 400 goes from UV space (0 to 1, 0 to 1), for the face, on the bottom left corner to UV space (4 to 5, 1 to 2), for the left iris, on the upper right corner. The UDIM map 400 shows UV space tiles for the following body parts: upper jaw 402, face 404, lower jaw 406, body 408, right eyeball 410, left eyeball 412, right lens 414, left lens 416, left iris 418, and right iris 420. For some embodiments, a look-up table may be created to link a UV space with a corresponding body part.

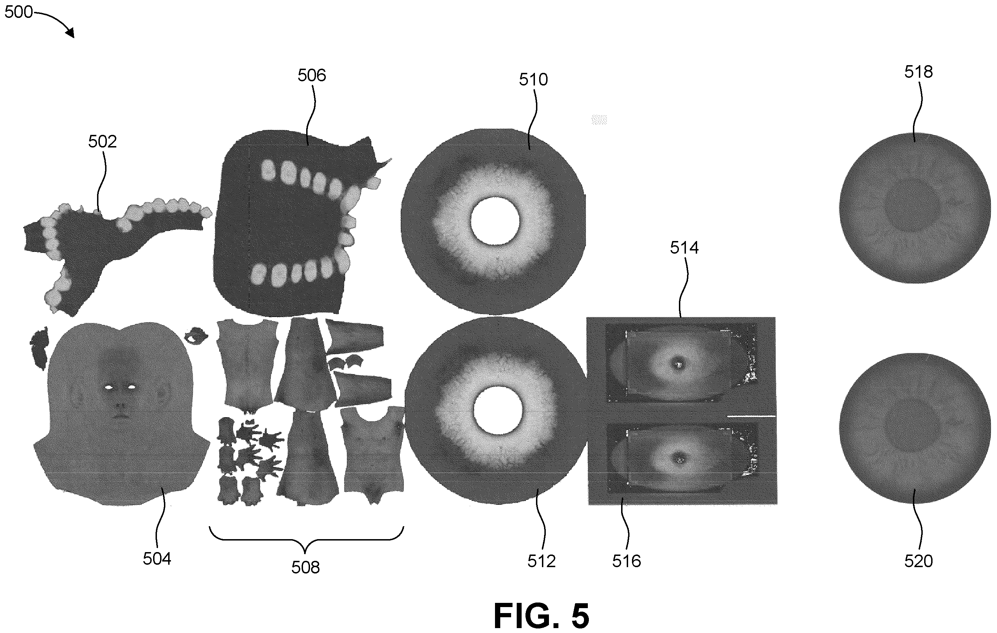

FIG. 5 is a schematic illustration showing example textures to apply to an avatar according to some embodiments. FIG. 5 shows an example set of UDIM textures 500 to apply to the avatar named "Morgan". The set of UDIM textures 500 include textures for the following body parts: upper jaw 502, face 504, lower jaw 506, body 508, right eyeball 510, left eyeball 512, right lens 514, left lens 516, left iris 518, and right iris 520.

Consider an application relying on MPEG-I-SD allowing users to represent and interact with 3D scenes. See *ISO*/*IEC 23090-14 Comments.* Users may want to use UDIM textures for the 3D meshes. To do so, as understood as of the filing of this application, there is no standardized, open format for an application to represent and encode UDIM texturing. For example, according to *gITF 3D Scene Transmission,* as understood, specifying UDIM texturing for one single mesh is not possible in the gITF format. Said differently, if a user defines a UDIM on an asset in Digital Content Creation (DCC) software (e.g., 3D software packages Blender, Maya, and Houdini, among others) and wants to export the work to another DCC software and keep the UDIM texturing, there is no existing open format that supports such UDIM information. The work with UDIM may be visually exported correctly, but the information related to UDIM will be lost and cannot be manipulated anymore.

The format described in the current application follows the gITF format as described in *gITF 3D Scene Transmission* and is compatible with the recent MPEG-I-SD effort to extend gITF with MPEG-I SD extensions. However, its meaning and use are generic and may be coded in other formats (e.g., Extensible Markup Language (XML), Universal Scene Description (USD), among others).

This application discusses, for some embodiments, modifying the gITF specifications to allow an "MPEG_texture_UDIM" extension to the "texture" property to add a "tiles" property to store multiple tiles (as a list) within the "MPEG_texture_UDIM" extension. The "Tile" element includes the properties of "name", "description", "purpose", "uValue", "vValue", and "source". The "name" property is used to store the name of the tile. The "description" property is used to store the description of the tile. The "purpose" property is used to store the purpose of the tile. The "uValue" property is used to store the u value minimum and maximum bounds. The "vValue" property is used to store the v value minimum and maximum bounds. The "source" property is used to store a reference to the image.

### MPEG texture UDIM

Two levels of extension, "MPEG_texture_UDIM" and "Tile", may be used to add UDIM information into a scene description format. The extension "MPEG_texture_UDIM" is used to extend the "texture" property. When "MPEG_texture_UDIM" is defined, its properties are as shown in Table 1.

| **Name** | **Type** | **Description** | **New** |
|---|---|---|---|
| uvTiles | Tile[1-*] | List of "tiles" definitions | Yes |

### Table 1.

The "tiles" property is an array of type "Tile", in which each entry defines a (new) texture tile.

Items in the "tiles" property may be referenced in gITF using their index in the list or their name (e.g., the "name" property in Tile). For example, if "tiles" has three items, then an index of 1 in another property in the file corresponds to the second item in the "tiles" list.

### Tile

Table 2 shows the attributes of the "Tile" structure.

**Table 2.**

| **Name** | **Type** | **Description** | **Req.** |
|---|---|---|---|
| name | string | The name of the tile | No |
| description | string | The description of the tile | No |
| purpose | string | The purpose of the tile | No |
| uValue | 2-tuple | The minimum and maximum values of the U coordinate of the tile | Yes |
| vValue | 2-tuple | The minimum and maximum values of the V coordinate of the tile | Yes |
| source | integer | A reference to the image | Yes |

The "name" property is a string that defines the name of the tile. The "name" property may be used for indexing, e.g., to retrieve the tile knowing its name.

The "description" property is a string that describes the tile. The "description" property may be used, for example, in a user interface.

The "purpose" property is a string that defines the purpose of the tile. The "purpose" property may be an information to its usage, such as "Face" which would mean that this tile refers to the face or "Body" for a body tile.

The "uValue" property is a 2-tuple (uMin, uMax) composed of two integer values representing the UV coordinates of the tile within the texture. The value of u belongs to the domain [uMin; uMax]. The value of "ulndex" is not limited to integers. The value of "ulndex" also may be defined as a float value for some embodiments.

The "vValue" property is a 2-tuple (vMin, vMax) composed of two integer values representing the UV coordinates of the tile within the texture. The value of v belongs to the domain [vMin; vMax]. The value of "ulndex" is not limited to integers. The value of "vindex" also may be defined as a float value for some embodiments.

The "source" property is an integer representing the reference to the image in the "images" list. For example, a source equal to 0 refers to the first image in the "images" list. For some embodiments, the "source" property may be referenced by a texture in a "textures" list.

### Examples

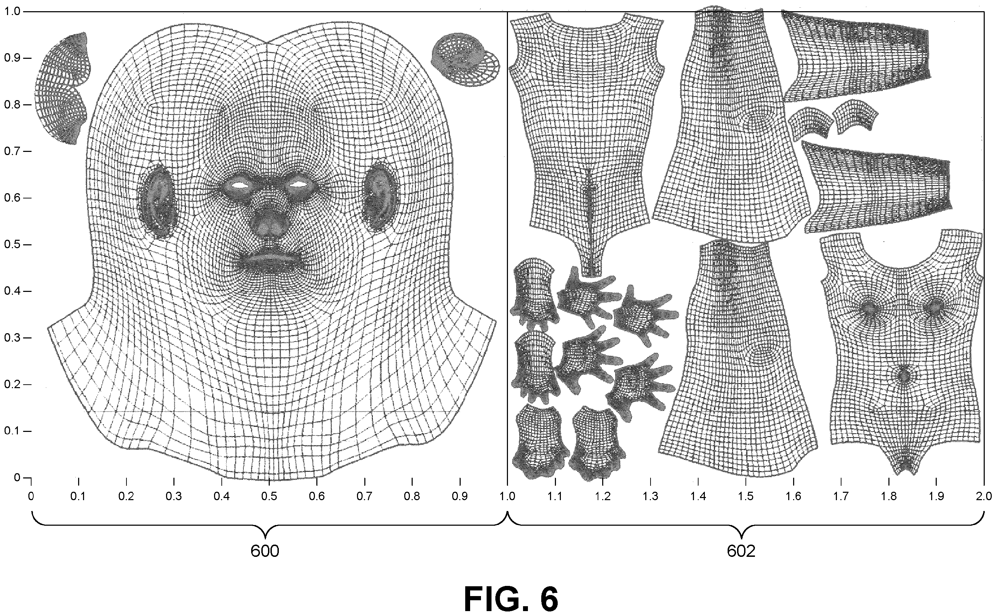

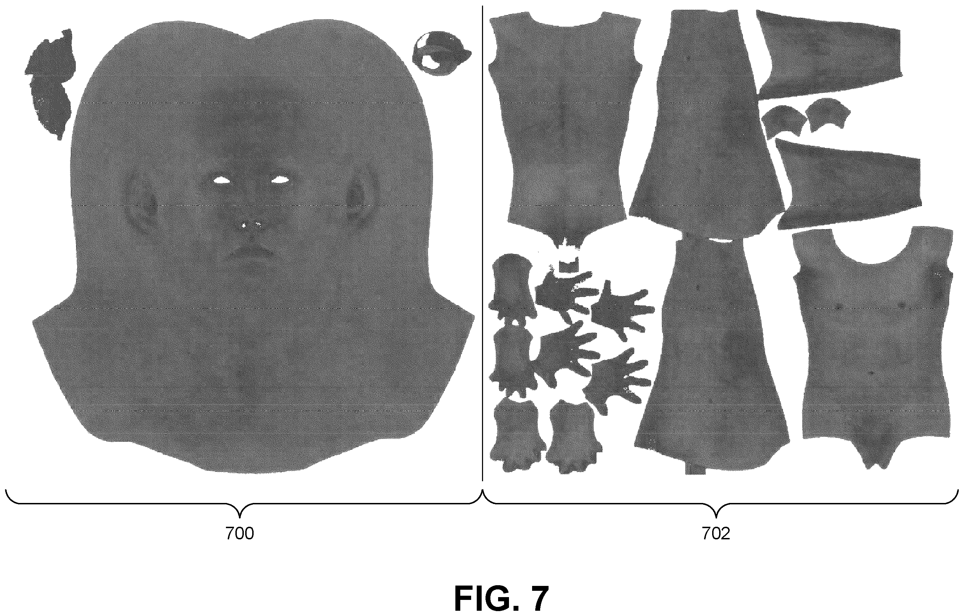

FIG. 6 is a schematic illustration showing an example UDIM space for an avatar according to some embodiments. The example shown in FIGs. 6 and 7 uses UDIM textures. Two UV spaces are shown in FIG. 6: a first UV space 600 for the face/head and a second UV space 602 for the body. The face/head UV space 600 is shown in tile 0, in which *u* ∈ [0,1] and *v* ∈ [0,1]. The body UV space 602 is shown in tile 1, in which u ∈ [0,1] and *v* ∈ [0,1].

FIG. 7 is a schematic illustration showing example UDIM space textures according to some embodiments. Two sets of textures are shown in FIG. 7: a first set 700 for the face/head and a second set 702 for the body. The face/head textures 700 of FIG. 7 correspond to the UV space 600 for tile 0 of FIG. 6. The body textures 702 of FIG. 7 correspond to the UV space 602 for tile 1 of FIG. 6.

Code Listing 1 shows an example gITF code listing corresponding to the "MPEG_texture_UDIM" extension and the example assets shown in FIGs. 6 and 7.

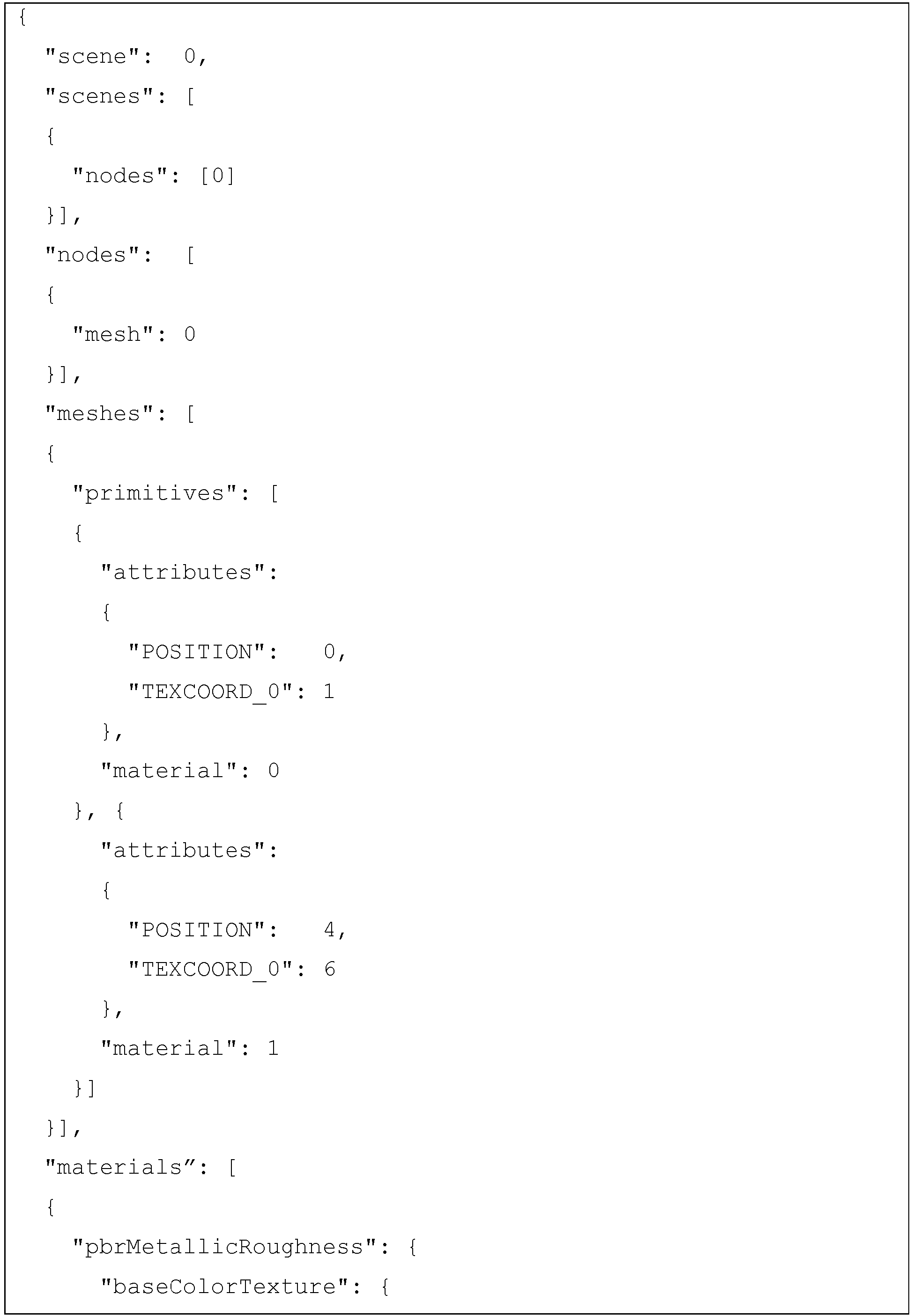

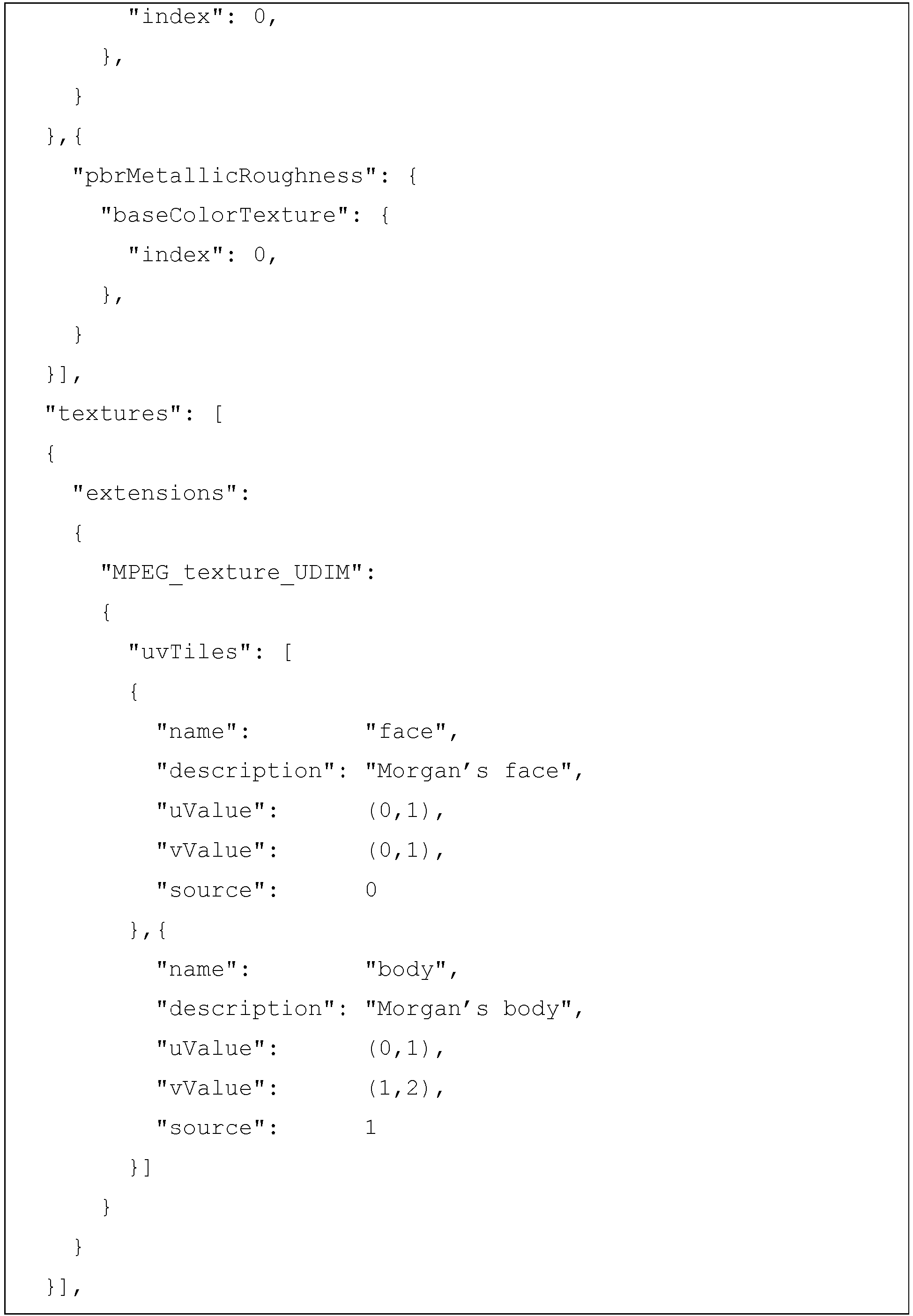

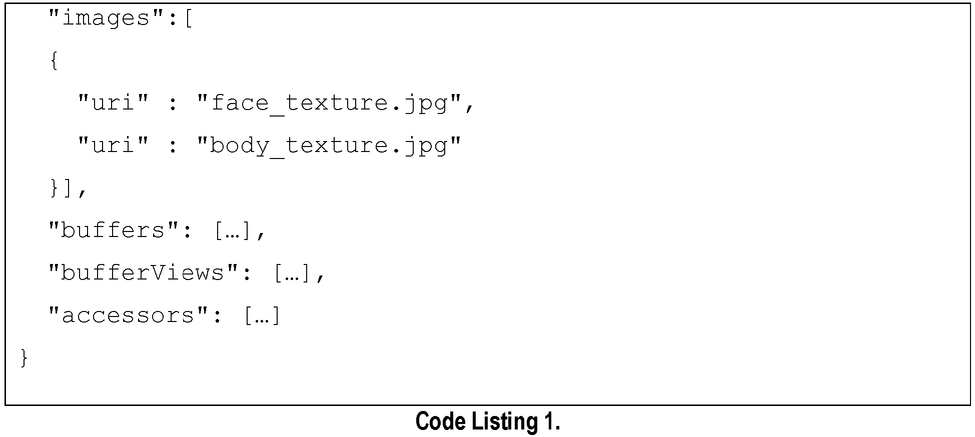

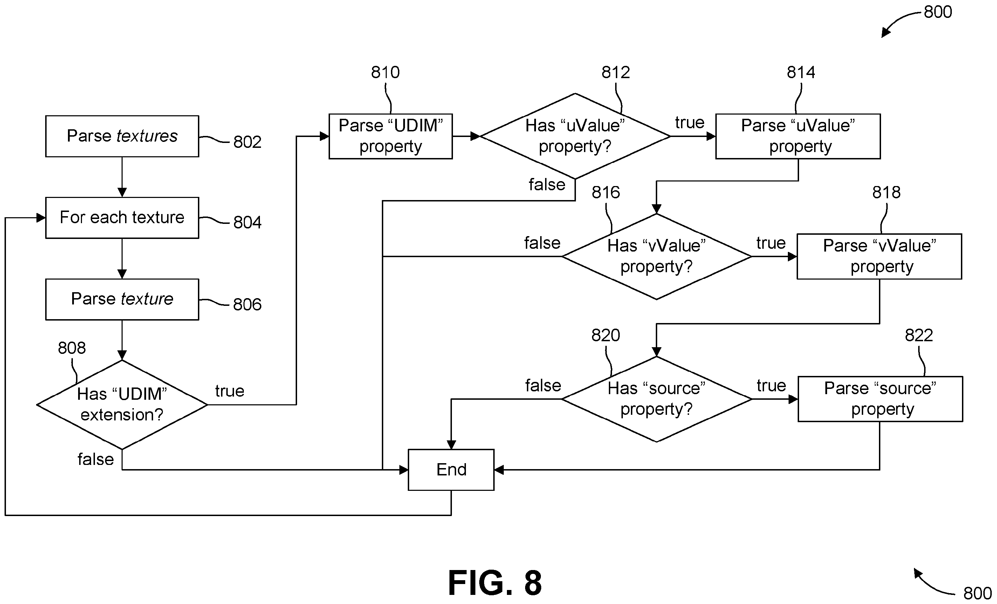

FIG. 8 is a flowchart illustrating an example processing of an MPEG_primitives_UDIM extension according to some embodiments. FIG. 8 shows an example processing model to use for processing properties of the "MPEG_primities_UDIM" extension, which extends the "primitives" component of a mesh.

The example process 800 happens each time a "meshes" component is processed in a gITF file. The *"textures"* structure is parsed 802. If the "textures" structure is not present, an error is raised for some embodiments. For each "texture" component (or element) defined in the "textures" structure, a loop is performed 804. If the "textures" structure does not have any "texture" components, then an error is raised for some embodiments. Within the loop, a "texture" component is parsed 806.

A determination 808 is made regarding whether the "UDIM" extension exists. For some embodiments, this determination 808 is done for each "texture" component. If the "UDIM" extension does not exist, then the loop exits. If the "UDIM" extension does exist, then the "UDIM" property is parsed 810. For some embodiments, parsing of the "UDIM" property includes parsing of the extension MPEG_texture_UDIM, which is a parsing of the data structure shown in Table 1.

A determination 812 is made regarding whether the "uValue" property (or attribute) exists. If the "uValue" property does not exist, then an error is raised for some embodiments and the loop exits. If the "uValue" property does exist, then the "uValue" property is parsed 814.

A determination 816 is made regarding whether the "vValue" property (or attribute) exists. If the "vValue" property does not exist, then an error is raised for some embodiments and the loop exits. If the "vValue" property does exist, then the "vValue" property is parsed 818.

A determination 820 is made regarding whether the "source" property (or attribute) exists. If the "source" property does not exist, then an error is raised for some embodiments and the loop exits. If the "source" property does exist, then the "source" property is parsed 822.

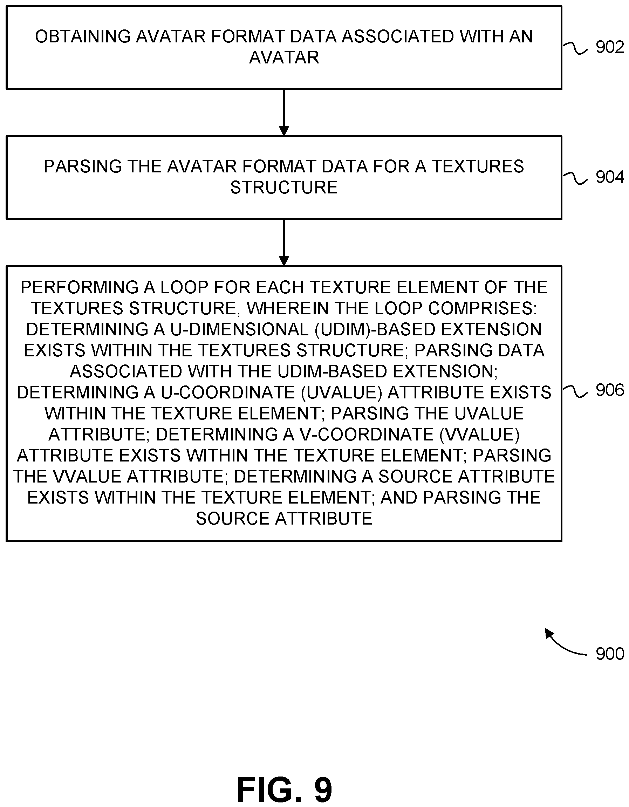

FIG. 9 is a flowchart illustrating an example process for processing avatar texture data according to some embodiments. For some embodiments, an example process 900 may include obtaining 902 avatar format data associated with an avatar. For some embodiments, the example process 900 may further include parsing 904 the avatar format data for a textures structure. For some embodiments, the example process 900 may further include performing 906 a loop for each texture element of the textures structure, wherein the loop includes: determining a U-Dimensional (UDIM)-based extension exists within the textures structure; parsing data associated with the UDIM-based extension; determining a u-coordinate (uValue) attribute exists within the texture element; parsing the uValue attribute; determining a v-coordinate (vValue) attribute exists within the texture element; parsing the vValue attribute; determining a source attribute exists within the texture element; and parsing the source attribute.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

An example method in accordance with some embodiments may include: obtaining avatar format data associated with an avatar; parsing the avatar format data for a textures structure; and performing a loop for each texture element of the textures structure, wherein the loop includes: determining a U-Dimensional (UDIM)-based extension exists within the textures structure; parsing data associated with the UDIM-based extension; determining a u-coordinate (uValue) attribute exists within the texture element; parsing the uValue attribute; determining a v-coordinate (vValue) attribute exists within the texture element; parsing the vValue attribute; determining a source attribute exists within the texture element; and parsing the source attribute.

For some embodiments of the example method, each texture element of the textures structure complies with a Tile structure defined in a Moving Picture Experts Group (MPEG)-based extension.

For some embodiments of the example method, the textures structure complies with a tiles structure defined in an MPEG -based extension.

Some embodiments of the example method may further include populating a data structure corresponding to at least one element of the textures structure.

For some embodiments of the example method, the textures structure includes information indicating a mapping between one or more textures and one or more corresponding UV space tiles.

For some embodiments of the example method, the mapping correlates at least one vertex in a three-dimensional (3D) texture to a respective location on a two-dimensional (2D) UV space tile.

For some embodiments of the example method, each uValue attribute includes minimum and maximum U coordinate values of a corresponding UV space tile, and each vValue attribute includes minimum and maximum V coordinate values of the corresponding UV space tile.

For some embodiments of the example method, each source attribute indicates a reference to an image.

For some embodiments of the example method, the textures structure includes a first texture element and a second texture element, the first texture element corresponds to a first UV space tile, and the second texture element corresponds to a second UV space tile.

For some embodiments of the example method, the first UV space tile corresponds to a first resolution, the second UV space tile corresponds to a second resolution, and the first resolution is different than the second resolution.

For some embodiments of the example method, the first UV space includes two or more textures corresponding to the avatar.

For some embodiments of the example method, at least one texture element of the textures structure corresponds to a body part of the avatar.

Some embodiments of the example method may further include rendering the avatar in a scene description environment using the textures structure.

For some embodiments of the example method, the avatar format data complies with at least one standard from a group consisting of an MPEG-I Scene Description (SD)-based standard, a Graphics Language Transmission Format (gITF)-based standard, an Extensible Markup Language (XML)-based standard, and a Universal Scene Description (USD)-based standard.

An example apparatus in accordance with some embodiments may include: a processor; and a memory storing instructions operative, when executed by the processor, to cause the apparatus to perform the method of any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

This disclosure describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the disclosure or scope of those aspects. Indeed, all of the different aspects can be combined and interchanged to provide further aspects. Moreover, the aspects can be combined and interchanged with aspects described in earlier filings as well.

Various numeric values may be used in the present disclosure, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this disclosure are not necessarily all referring to the same embodiment.

Additionally, this disclosure may refer to "determining" various pieces of information. Determining the information can include one or more of, for example, estimating the information, calculating the information, predicting the information, or retrieving the information from memory.

Further, this disclosure may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this disclosure may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
obtaining avatar format data associated with an avatar;
parsing the avatar format data for a textures structure; and
performing a loop for each texture element of the textures structure,
wherein the loop comprises:
determining a U-Dimensional (UDIM)-based extension exists within the textures structure;
parsing data associated with the UDIM-based extension;
determining a u-coordinate (uValue) attribute exists within the texture element;
parsing the uValue attribute;
determining a v-coordinate (vValue) attribute exists within the texture element;
parsing the vValue attribute;
determining a source attribute exists within the texture element; and
parsing the source attribute.

2. The method of claim 1, wherein each texture element of the textures structure complies with a Tile structure defined in a Moving Picture Experts Group (MPEG)-based extension.

3. The method of any one of claims 1-2, wherein the textures structure complies with a tiles structure defined in an MPEG -based extension.

4. The method of any one of claims 1-3, further comprising populating a data structure corresponding to at least one element of the textures structure.

5. The method of any one of claims 1-4, wherein the textures structure comprises information indicating a mapping between one or more textures and one or more corresponding UV space tiles.

6. The method of claim 5, wherein the mapping correlates at least one vertex in a three-dimensional (3D) texture to a respective location on a two-dimensional (2D) UV space tile.

7. The method of any one of claims 1-6,
wherein each uValue attribute comprises minimum and maximum U coordinate values of a corresponding UV space tile, and
wherein each vValue attribute comprises minimum and maximum V coordinate values of the corresponding UV space tile.

8. The method of any one of claims 1-7, wherein each source attribute indicates a reference to an image.

9. The method of any one of claims 1-8,
wherein the textures structure comprises a first texture element and a second texture element,
wherein the first texture element corresponds to a first UV space tile, and
wherein the second texture element corresponds to a second UV space tile.

10. The method of claim 9,
wherein the first UV space tile corresponds to a first resolution,
wherein the second UV space tile corresponds to a second resolution, and
wherein the first resolution is different than the second resolution.

11. The method of any one of claims 9-10, wherein the first UV space comprises two or more textures corresponding to the avatar.

12. The method of any one of claims 1-11, wherein at least one texture element of the textures structure corresponds to a body part of the avatar.

13. The method of any one of claims 1-12, further comprising rendering the avatar in a scene description environment using the textures structure.

14. The method of any one of claims 1-13, wherein the avatar format data complies with at least one standard from a group consisting of an MPEG-I Scene Description (SD)-based standard, a Graphics Language Transmission Format (gITF)-based standard, an Extensible Markup Language (XML)-based standard, and a Universal Scene Description (USD)-based standard.

15. An apparatus comprising:
a processor; and
a memory storing instructions operative, when executed by the processor, to cause the apparatus to perform the method of any one of claims 1 through 14.
